# EUROPÄISCHE PATENTANMELDUNG

(11) **EP 4 338 577 A1**
(43) Veröffentlichungstag der Anmeldung: **20.03.2024**
(21) Anmeldenummer: 23186584.1
(22) Anmeldetag: 20.07.2023
(51) Int. Cl.: A01F 7/04

(54) **SELBSTFAHRENDER MÄHDRESCHER**

(30) Priorität: 13.09.2022 DE 102022123320
(71) Anmelder: CLAAS Selbstfahrende Erntemaschinen GmbH, 33428 Harsewinkel (DE)
(72) Erfinder: BUßMANN, Jens, 49179 Ostercappeln (DE)
(74) Vertreter: CLAAS Gruppe

(57) **Zusammenfassung**

Die vorliegende Anmeldung betrifft einen selbstfahrenden Mähdrescher (1), umfassend eine Drescheinrichtung (2) sowie eine Trenneinrichtung (3), wobei die Drescheinrichtung (2) eine um eine Mittelachse (11) drehantreibbare Dreschtrommel (5) sowie einen Dreschkorb (6) aufweist, wobei die Trenneinrichtung (3) in Strömungsrichtung des Erntegutstroms betrachtet der Drescheinrichtung (2) unmittelbar der Dreschtrommel (5) nachgeschaltet ist und zwei axiale Trennrotoren (7, 8) umfasst, die um eine Drehachse (20) drehantreibbar gelagert sind, wobei die Trenneinrichtung (3) an einem der Dreschtrommel (5) zugewandten Ende einen Einlaufkopf (10) aufweist, in den Erntegut übergebbar und geordnet den Trennrotoren (7, 8) zuleitbar ist.

Um einen Mähdrescher bereitzustellen, bei dem die Übergabe des Ernteguts von der Drescheinrichtung an die Trenneinrichtung optimiert ist, wird vorgeschlagen, dass Einlaufbereiche (29) des Einlaufkopfs (10) in ihren jeweiligen Zuführabschnitten (21) jeweils eine Einlaufschräge (24) aufweisen, deren Steigung an eine Übergaberichtung (23) angeglichen ist, in die das Erntegut im Moment seiner Übergabe von der Dreschtrommel (5) an den Einlaufkopf (10) tangential bezogen auf die Mittelachse (11) strömt.

## Beschreibung

Die vorliegende Anmeldung betrifft einen selbstfahrenden Mähdrescher gemäß dem Oberbegriff von Anspruch 1.

Der Mähdrescher ist dazu vorgesehen und eingerichtet, auf einem Feld aufstehende Pflanzen zu ernten, wobei die Pflanzen unter anderem mittels einer Drescheinrichtung verarbeitet werden. Diese ist als tangentiale Drescheinrichtung ausgebildet und umfasst eine tangentiale Vortrommel sowie eine in Strömungsrichtung eines Erntegutstroms der Vortrommel nachgeschaltete tangentiale Dreschtrommel. Ferner umfasst die Drescheinrichtung einen Dreschkorb, der sowohl die Vortrommel als auch die Dreschtrommel zumindest bereichsweise ummantelnd einfasst. Im Zuge der Verarbeitung des jeweiligen Ernteguts wird letzteres in einem Dreschspalt zwischen der Vortrommel und dem Dreschkorb bzw. zwischen der Dreschtrommel und dem Dreschkorb geführt und derart verarbeitet, dass sich Früchte des Ernteguts von verbleibenden Pflanzenresten des Ernteguts lösen. Ein Großteil der Früchte wird unmittelbar mittels des Dreschkorbs von den Pflanzenresten abgeschieden. Der Dreschkorb kann relativ zu der Dreschtrommel bewegbar sein, sodass ein zwischen der Dreschtrommel und dem Dreschkorb befindlicher Dreschspalt veränderbar ist. Die Veränderung einer Mächtigkeit des Dreschspalts wird typischerweise je nach herrschenden Randbedingungen wie beispielsweise Feuchte des Ernteguts und Erntegutdurchsatz vorgenommen, um das Dreschergebnis zu optimieren.

Die Dreschtrommel der Drescheinrichtung umfasst einen zylindrischen, um seine Mittelachse drehantreibbaren Trommelkörper sowie eine Vielzahl von Schlagleisten, die an einer äußeren Mantelfläche des Trommelkörpers angeordnet sind. Die Schlagleisten weisen jeweils eine Schlagkante auf, die parallel zu der Mittelachse des Trommelkörpers orientiert ist. Mithin erstrecken sich die Schlagleisten parallel zu der Mittelachse entlang des Trommelkörpers, wobei vorzugsweise sich die Schlagleisten über eine gesamte Länge des Trommelkörpers erstrecken. Die Schlagleisten sind dazu vorgesehen, mit dem Erntegut in Kontakt zu treten und eine Schlagenergie auf das Erntegut auszuüben, sodass die Früchte "ausgedroschen" werden, wodurch die Trennung der Früchte von den Pflanzenresten erfolgt. Damit die Schlagleisten bzw. insbesondere deren Schlagkanten in den beschriebenen Eingriff mit dem Erntegut treten können, stehen die Schlagleisten jeweils in radiale Richtung bezogen auf die Mittelachse des Trommelkörpers in eine von der Mittelachse weg gerichtete Richtung über die äußere Mantelfläche des Trommelkörpers vor. Die radial außenliegenden Schlagkanten der Schlagleisten beschreiben um die Mittelachse einen Umfangskreis, auf dem sie sich im Zuge eines Drehantriebs der Dreschtrommel bewegen. Der Umfangskreis der Schlagkanten weist bezogen auf die Mittelachse einen Schlagradius auf. Vorzugsweise sind die Schlagleisten derart ausgebildet, dass die Umfangskreise aller Schlagkanten sämtlicher Schlagleisten zumindest im Wesentlichen den gleichen Schlagradius aufweisen.

Soweit die Früchte noch nicht im Bereich der Drescheinrichtung abgeschieden werden, wird ein verbleibendes Gemisch aus Pflanzenresten und abgelösten Früchten von der Dreschtrommel an eine unmittelbar nachgeschaltete, axiale Trenneinrichtung übergeben, mittels der die verbliebenen Früchte von den Pflanzenresten trennbar sind. Die Trenneinrichtung umfasst mindestens einen axialen Trennrotor, vorzugsweise zwei axiale Trennrotoren, die jeweils um eine Drehachse drehantreibbar gelagert sind. Typischerweise erstrecken sich die Trennrotoren parallel zueinander und sind in Längsrichtung des Mähdreschers betrachtet nebeneinander angeordnet. Für eine vorteilhafte Übernahme des Erntegutstroms kann es vorteilhaft sein, wenn die Trennrotoren gegenläufig um ihre Drehachsen angetrieben werden, wobei die Drehrichtungen vorteilhafterweise derart eingestellt sind, dass die Trennrotoren jeweils von schräg unten zur Mitte aufeinander zu drehen. Mit anderen Worten drehen bevorzugt der in Strömungsrichtung des Ernteguts betrachtet linke Trennrotor entgegen dem Uhrzeigersinn und der rechte Trennrotor mit dem Uhrzeigersinn. Um die Übergabe des Ernteguts von der Drescheinrichtung an die Trenneinrichtung zu erleichtern, umfasst die Trenneinrichtung an ihrem der Dreschtrommel zugewandten Ende einen Einlaufkopf, in den das Erntegut ausgehend von der Drescheinrichtung übergebbar ist. Der Einlaufkopf hat die Funktion, den Erntegutstrom geordnet dem mindestens einen Trennrotor zuzuleiten.

Der mindestens eine Trennrotor weist an seinem der Drescheinrichtung zugewandten Ende mindestens einen Einlaufflügel auf, der sich bezogen auf die Drehachse des jeweiligen Trennrotors radial erstreckt und dazu vorgesehen und eingerichtet ist, in einen Einlaufbereich des Einlaufkopfs, der dem Trennrotor zugeordnet ist, übergebenes Erntegut zu erfassen und in eine Rotationsbewegung um die Drehachse des Trennrotors zu versetzen. Im Zuge des Betriebs des Trennrotors wird das Erntegut mittels des Trennrotors spiralförmig entlang dessen Drehachse bis zu einem hinteren Ende der Trenneinrichtung transportiert. Durch die mechanische Einwirkung des Trennrotors auf das Gemisch findet hierbei die gewünschte Trennung der Früchte von den Pflanzenresten statt. Die Früchte werden durch ein Dreschkorb der Trenneinrichtung nach unten auf eine Siebeinrichtung abgeschieden.

Nach der Trennung des Gemischs in Pflanzenreste und Früchte werden die Pflanzenreste schließlich an einem hinteren Ende des Mähdreschers ausgeworfen, während die Früchte in einem Korntank gesammelt werden.

Ein Mähdrescher der eingangs beschriebenen Art ist im Stand der Technik bereits bekannt. Hierzu wird auf die Offenlegungsschrift DE 42 32 450 A1 hingewiesen, die einen selbstfahrenden Mähdrescher mit einer axialen Trenneinrichtung beschreibt. Das Dokument beschäftigt sich damit, eine Drehmomentbelastung des mindestens einen Trennrotors der Trenneinrichtung zu vergleichmäßigen.

In der Praxis hat sich insbesondere die Übergabe des Ernteguts von der Drescheinrichtung an die Trenneinrichtung als kritisch für einen effizienten Betrieb des Mähdreschers herausgestellt. Dies liegt unter anderem darin begründet, dass der Erntegutstrom im Zuge der Übergabe von der Trenneinrichtung aufgenommen und umgelenkt werden muss, wodurch sich eine Unstetigkeit in der Strömung des Ernteguts ergibt. Hierbei kann es zu Störungen kommen, beispielsweise in Form von Verstopfungen oder sonstigen Einflüssen, die einen negativen Einfluss auf die Verarbeitung des Ernteguts haben.

Der vorliegenden Anmeldung liegt mithin die Aufgabe zugrunde, einen Mähdrescher bereitzustellen, bei dem die Übergabe des Ernteguts von der Drescheinrichtung an die Trenneinrichtung optimiert ist.

Die zugrunde liegende Aufgabe wird erfindungsgemäß mittels eines Mähdreschers mit den Merkmalen des Anspruchs 1 gelöst. Vorteilhafte Ausgestaltungen ergeben sich aus den zugehörigen Unteransprüchen.

Der erfindungsgemäße Mähdrescher ist dadurch gekennzeichnet, dass der Einlaufkopf an einem der Dreschtrommel zugewandten Ende einen mittigen, die beiden Einlaufbereiche voneinander trennenden Gutstromteiler aufweist. Dieser ist in Form einer vertikal orientierten Trennwand ausgebildet, die zwischen den beiden Einlaufbereichen angeordnet ist. Der Gutstromteiler ist besonders hilfreich, um den Erntegutstrom auf die beiden Einlaufbereiche des Einlaufkopfs aufzuteilen, wobei jedem der Trennrotoren jeweils ein Einlaufbereich des Einlaufkopfs zugeordnet ist. Mittels des Gutstromteilers wird folglich eine scharfe Abgrenzung zwischen den Einlaufbereichen bewirkt, sodass der Erntegutstrom - möglichst zu gleichen Teilen - auf die beiden Trennrotoren aufgeteilt und mittels letzterer weiter verarbeitet wird.

Ferner ist der Mähdrescher dadurch gekennzeichnet, dass die Einlaufbereiche in jeweiligen Zuführabschnitten, die sich ausgehend von einem der Dreschtrommel zugewandten Ende des Einlaufkopfs aus in axiale Richtung der Trennrotoren erstrecken, jeweils eine Einlaufschräge aufweisen. Wesentlich ist hierbei, dass die Steigung der Einlaufschräge - in einem senkrecht zu der Mittelachse eines Trommelkörpers der Dreschtrommel geführten Querschnitt betrachtet - an eine Übergaberichtung angeglichen ist, in die das Erntegut im Moment der Übergabe von der Dreschtrommel an den Einlaufkopf tangential bezogen auf die Mittelachse des Trommelkörpers strömen. Dem liegt die Überlegung zugrunde, dass das Erntegut im Zuge seiner Verarbeitung mittels der Dreschtrommel von den Schlagleisten der Dreschtrommel erfasst und dadurch gemäß obiger Beschreibung ausgedroschen wird, wobei das Erntegut in einem Dreschspalt zwischen der Dreschtrommel und dem Dreschkorb geführt ist. Die Bewegung des Erntegutstroms erfolgt dabei zumindest im Wesentlichen in Umfangsrichtung der Dreschtrommel, d.h. tangential bezogen auf einen von den Schlagleisten gebildeten Umfangskreis um die Mittelachse des Trommelkörpers der Dreschtrommel. Entsprechend wird diese Art von Drescheinrichtung als "tangentiale Drescheinrichtung" kategorisiert. Bei der Übergabe des Ernteguts von der Drescheinrichtung an den Einlaufkopf, die unmittelbar ausgehend von der Dreschtrommel erfolgt, bewegt sich das Erntegut mithin an einer Übergabestelle, an der effektiv das Erntegut von der Drescheinrichtung, das heißt aus dem Dreschspalt zwischen Dreschkorb und Dreschtrommel, an die Trenneinrichtung übergeben wird, tangential bezogen auf die Mittelachse des Trommelkörpers der Dreschtrommel. Um die Strömung des Ernteguts möglichst wenig zu behindern und die vorstehend beschriebenen Probleme zu vermeiden, ist es entsprechend vorteilhaft, wenn der Erntegutstrom bei seiner Übergabe an die Trenneinrichtung, d.h. bei seinem Eintritt in den Einlaufkopf bzw. die Einlaufbereiche desselben, nicht umgeleitet bzw. umgelenkt werden muss, da durch eine solche Umlenkung lediglich ein hinderlicher Strömungswiderstand bedingt wäre. Entsprechend ist es vorteilhaft, dass die Einlaufschrägen der Einlaufbereiche des Einlaufkopfs in Angleichung an die Übergaberichtung orientiert ist, in der das Erntegut an die Trenneinrichtung bzw. den Einlaufkopf übergeben wird. Hierdurch ist ein "weicher" oder "sanfter" Übergang des Erntegutstroms von der Drescheinrichtung an die Trenneinrichtung begünstigt.

Die Neigung der Einlaufschräge hängt mithin von einer Anordnung der Dreschtrommel relativ zu dem Einlaufkopf ab. Bevorzugt findet die Übergabe des Ernteguts von der Dreschtrommel an den Einlaufkopf, d.h. bei dem Austritt des Erntegutstroms aus dem Dreschspalt und im Moment seines Einströmens in die Einlaufbereiche des Einlaufkopfs, unter einem Winkel zwischen 30° und 55°, vorzugsweise zwischen 40° und 50°, weiter vorzugsweise in einem Winkel von ca. 45° schräg nach oben gegenüber einer Horizontalen statt. Diese Orientierung hat sich als besonders vorteilhaft herausgestellt, damit die Übernahme des Ernteguts mittels der Trennrotoren, die mit der eingangs beschriebenen Versetzung des Erntegutstroms in eine spiralförmige Bewegung um die Drehachsen der Trennrotoren einhergeht, besonders "sanft" vonstattengeht. Dies hat neben der bereits beschriebenen Verbesserung des Gutflusses als solchen ferner den Vorteil, dass die einzelnen Bestandteile des Erntegutstroms, nämlich die darin enthaltenen Früchte (beispielsweise Körner) sowie Pflanzenreste (beispielsweise Stroh) lediglich geringer mechanischer Einwirkung ausgesetzt sind und es somit zu einem besonders gering ausgeprägten Kornbruch und/oder Strohbruch kommt.

In einer vorteilhaften Ausgestaltung des erfindungsgemäßen Mähdreschers weisen die Einlaufbereiche des Einlaufkopfs jeweils eine Aufweitung auf, wobei sich die Einlaufbereiche derart aufweiten, dass eine Freifläche eines ersten senkrecht zu den Drehachsen der Trennrotoren geführten Querschnitts innerhalb eines Einlaufbereichs des Einlaufkopfs größer ist als die Freifläche eines zweiten, parallel zu dem ersten Querschnitt geführten Querschnitts, der in einem größeren Abstand von der Dreschtrommel in dem Einlaufbereich geführt ist. Unter einer "Freifläche" wird hierbei eine solche Querschnittsfläche des jeweiligen Einlaufbereichs verstanden, die frei von Einbauten ist und somit dem Erntegutstrom zur Strömung frei zu Verfügung steht. Die Aufweitung in der Einlaufbereiche kann sowohl stetig als auch unstetig, beispielsweise sprunghaft, erfolgen, wobei bei einer stetigen Aufweitung eine lineare oder nicht-lineare Aufweitung denkbar ist. Auch ist eine Kombination aus einer unstetigen Aufweitung und beispielsweise einer sich daran anschließenden stetigen Aufweitung denkbar.

Wie vorstehend dargelegt, hat die Aufweitung zur Folge, dass Freiflächen von senkrecht zu den Drehachsen der Trennrotoren geführten Querschnitten in Richtung auf die Dreschtrommel zu betrachtet größer werden. Hierdurch ist bedingt, dass dem Erntegut im Zuge seines Übertritts von der Dreschtrommel in den Einlaufkopf an dem der Dreschtrommel zugewandten Ende des Einlaufkopfs eine möglichst große Eintrittsfläche zur Verfügung steht, durch die hindurch das Erntegut in den Einlaufkopf eintreten kann. Mit anderen Worten ist der Einlaufkopf mittels der Aufweitungen der Einlaufbereiche derart konstruiert, dass er sich zu der Dreschtrommel hin vergrößert bzw. erweitert, um dem Erntegut möglichst viel Raum zum Einströmen in den Einlaufkopf bereitzustellen. Hierdurch ist die Strömungscharakteristik des Erntegutstroms im Zuge der Übergabe an den Einlaufkopf verbessert und umgekehrt sind Strömungswiderstände, die auf den Erntegutstrom einwirken, reduziert.

Sofern die Einlaufbereiche jeweils eine beschriebene Aufweitung aufweisen, ist es besonders vorteilhaft, wenn sich die Einlaufschräge eines jeweiligen Einlaufbereichs ausgehend von einem der Dreschtrommel zugewandten Ende des Einlaufkopfs bis zu einem Ende der Aufweitung erstreckt. Der parallel zu den Drehachsen der Trennrotoren gemessene Abschnitt des Einlaufbereichs, in dem sich die Einlaufschräge erstreckt, wird im Sinne der vorliegenden Anmeldung auch als "Zuführabschnitt" bezeichnet. Bevorzugt befindet sich an dem in Strömungsrichtung des Ernteguts betrachteten Ende des jeweiligen Zuführabschnitts, d.h. an dem Ende der jeweiligen Einlaufschräge, eine sprunghafte Aufweitung, die in Strömungsrichtung des Erntegutstroms betrachtet von einem Rücksprung gebildet ist. Entsprechend ist eine Freifläche eines senkrecht zu den Drehachsen der Trennrotoren geführten Querschnitts innerhalb des Zuführabschnitts größer als in Strömungsrichtung des Ernteguts betrachtet jenseits des Zuführabschnitts, sodass die Freifläche jenseits des Zuführabschnitts infolge der Aufweitung, die in der betrachteten Richtung effektiv einen Rücksprung darstellt, verringert ist. Eine Vergrößerung der Freiflächen - und mithin im Wortsinn die Aufweitung - liegt entsprechend umgekehrt in Richtung auf die Dreschtrommel zu betrachtet vor.

In einer weiterhin vorteilhaften Ausgestaltung des erfindungsgemäßen Mähdreschers weist der Einlaufkopf mindestens ein Führungselement auf, das sich nach Art eines Spiralabschnitts sowohl tangential bezogen auf die Drehachse des jeweils zugehörigen Trennrotors als auch mit einer Steigung bezogen auf die Drehachse des jeweilig zugehörigen Trennrotors an einer inneren Mantelfläche des jeweiligen Einlaufbereichs erstreckt. Ein solches Führungselement ist besonders gut dazu geeignet, den von der Drescheinrichtung übernommenen Erntegutstrom im Zuge seines Eintritts in den Einlaufkopf - und mithin der Übernahme mittels eines jeweiligen Trennrotors - in die gewünschte spiralförmige Bewegung zu versetzen, in der der Erntegutstrom im Zuge der Verarbeitung mittels des Trennrotors weitergeführt wird. Die Führung der Strömung des Ernteguts hilft der Vorbeugung eines ungeordneten Gutflusses innerhalb des Einlaufkopfs bzw. des jeweiligen Einlaufbereichs, wodurch das Risiko von Verstopfungen oder sonstigen Störungen weiter reduziert wird.

In besonders bevorzugter Weise weist der Einlaufkopf in den Einlaufbereichen jeweils eine Mehrzahl solcher Führungselemente auf, wobei beispielsweise die Führungselemente eines jeweiligen Einlaufbereichs parallel zueinander angeordnet sind. Ferner kann es vorteilhaft sein, wenn die Führungselemente äquidistant zueinander angeordnet sind, d.h. in einem konstanten Abstand voneinander, der zwischen allen jeweils benachbarten Führungselementen zumindest im Wesentlichen gleich ist. Die Verwendung mehrerer Führungselemente, die in der beschriebenen Weise vergleichmäßigt in dem jeweiligen Einlaufbereich angeordnet sind, erhöht die gutleitende Wirkung, sodass die Strömung des Ernteguts weiter vergleichmäßigt wird.

Betreffend das mindestens ein Führungselement ist es weiterhin besonders vorteilhaft, wenn selbiges - in einem Querschnitt des jeweiligen Einlaufbereichs betrachtet - in einer oberen Hälfte des Einlaufkopfs an der inneren Mantelfläche des Einlaufbereichs angeordnet ist bzw. sich an der inneren Mantelfläche des Einlaufbereichs erstreckt. Sofern der Einlaufkopf über eine Mehrzahl von Führungselementen umfasst, ist eine derartige Anordnung für jedes einzelne der Führungselemente vorteilhaft. Die Anordnung des mindestens einen Führungselements in der oberen Hälfte des Einlaufkopfs (das heißt an der "Decke" des jeweiligen Einlaufbereichs) ist insoweit zu bevorzugen, als der Erntegutstrom gemäß vorstehender Beschreibung bevorzugt ausgehend von der Drescheinrichtung in eine schräg aufwärts orientierte Richtung, beispielsweise in einem 45° Winkel schräg nach oben, in die Einlaufbereiche eingeleitet wird. Der Erntegutstrom ist mithin im Bereich des Einlaufkopfs, der gemäß vorstehender Beschreibung ein der Drescheinrichtung zugewandtes Ende der Trenneinrichtung bildet, in Richtung auf die obere Hälfte des Einlaufkopfs zu strömend orientiert, sodass in dieser oberen Hälfte das mindestens eine Führungselement seine Wirkung am besten entfalten kann. Mit anderen Worten wird das Führungselement bei seiner Anordnung in der beschriebenen Weise in der oberen Hälfte des Einlaufkopfs hauptsächlich von dem Erntegutstrom bei dessen Eintritt in den Einlaufkopf angeströmt, sodass das Führungselement seine führende und damit leitende Wirkung auf den Erntegutstrom entfalten kann.

Bevorzugt ist der Einlaufkopf mit einer solchen Anzahl von Führungselementen ausgestattet, dass der Erntegutstrom dem jeweiligen Trennrotor geordnet zugeführt werden kann, sodass der Trennrotor den Erntegutstrom übernehmen und mittels seiner Flügel in die gewünschte spiralförmige Bewegung um seine Drehachse versetzen kann.

Weiterhin kann eine solche Ausgestaltung des erfindungsgemäßen Mähdreschers vorteilhaft sein, bei der die Steigung des mindestens einen Führungselements bezogen auf die Drehachse des jeweilig zugehörigen Trennrotors an die Übergaberichtung, in der das Erntegut ausgehend von der Dreschtrommel an den Einlaufkopf übergeben wird, betragsmäßig angepasst ist. Der Betrag der Steigung ist derart gewählt, dass der Erntegutstrom beim Übergang von dem Dreschspalt in den Einlaufkopf zumindest im Wesentlichen umlenkungsfrei übernommen wird. Sofern beispielsweise der Erntegutstrom unter einem Winkel von 50° schräg nach oben gerichtet ausgehend von dem Dreschspalt an den Einlaufkopf übergeben wird und mithin unter diesem Winkel in die Einlaufbereiche entlang der Einlaufschräge einströmt, ist es entsprechend vorteilhaft, wenn sich das mindestens eine Führungselement, vorzugsweise die Mehrzahl von Führungselementen, mit einer solchen Steigung (im Sinne einer Gewindesteigung) bezogen auf die Drehachse des zugehörigen Trennrotors erstreckt, dass das in dem beschriebenen Winkel von 50° strömende Erntegut ohne Änderung des genannten Winkels (in einem senkrecht zu der Mittelachse des Trommelkörpers der Dreschtrommel betrachtet) von dem Führungselement aufnehmbar ist. Hierdurch wird begünstigt, dass der Erntegutstrom in die gewünschte spiralförmige Bewegung um die Drehachse des jeweiligen Trennrotors versetzt wird.

Den Mähdrescher weiter ausgestaltend sind die Trennrotoren jeweils mit mindestens einem Einlaufflügel ausgebildet. Bevorzugt umfassen die Trennrotoren jeweils 2 Einlaufflügel, die bezogen auf die Drehachse des jeweiligen Trennrotors um 180° versetzt zueinander angeordnet sind. Die Einlaufflügel sind jeweils einem Zuführabschnitt eines jeweiligen Einlaufbereichs des Einlaufkopfs zugeordnet. Das heißt dass die Einlaufflügel im Zuge eines Drehantriebs des jeweiligen Trennrotors solches Erntegut erfassen können, dass unmittelbar nach seinem Übertritt in den jeweiligen Einlaufbereich sich noch in dem Zuführabschnitt des Einlaufbereichs befindet. Diese Ausgestaltung hat den Vorteil, dass das Erntegut so zügig wie möglich nach seinem Eintritt in den Einlaufkopf erfasst und in die gewünschte spiralförmige Drehung um die Drehachse des jeweiligen Trennrotors versetzt werden kann. Dadurch wird das Erntegut zügig weiter verarbeitet, sodass eine Anhäufung von Erntegut in dem jeweiligen Zuführabschnitt sowie eine damit gegebenenfalls einhergehende Verstopfung des Einlaufbereichs vermieden ist.

Schließlich kann eine solche Ausgestaltung von Vorteil sein, bei der der Einlaufkopf an seinem der Dreschtrommel zugewandten Ende über eine Abstreifkante verfügt, die parallel zu der Mittelachse des Trommelkörpers der Dreschtrommel orientiert ist. Die Abstreifkante ist insbesondere auf einem Höhenniveau der Drehachsen der Trennrotoren oder darüber angeordnet, sodass dem Erntegut unterhalb der Abstreifkante ausreichend Raum bzw. Freifläche des jeweiligen Einlaufbereichs zur Verfügung steht, um ungestört in den jeweiligen Einlaufbereich einzutreten. Die Abstreifkante dient dazu, solches Erntegut in den Einlaufkopf abzuführen, dass sich infolge des Drehantriebs der Dreschtrommel in Umfangsrichtung der Dreschtrommel bewegt. Da die Dreschtrommel mit einer hohen Drehzahl betrieben wird, ist es üblich, dass eine gewisse Menge von Erntegut im Bereich der Übergabe an die Trenneinrichtung über die Dreschtrommel übergeworfen wird, wobei das Erntegut bedingt durch Energie der Schlagleisten in tangentialer Richtung der Dreschtrommel beschleunigt wird. Dieses Überwerfen wird mittels der Abstreifkante zumindest im Wesentlichen verhindert, da das in Umfangsrichtung der Dreschtrommel geführte Erntegut gegen die Abstreifkante schlägt und von dieser von der Umfangsrichtung der Dreschtrommel abgelenkt und in den Einlaufkopf bzw. dessen Einlaufbereiche eingeleitet wird.

Die Erfindung ist nachstehend anhand eines Ausführungsbeispiels, das in den Figuren dargestellt ist, näher erläutert. Es zeigt:
- Fig. 1:: Einen Querschnitt durch einen Mähdrescher gemäß dem Stand der Technik,
- Fig. 2:: Ein Querschnitt durch einen Arbeitsstrang eines Mähdreschers gemäß dem Stand der Technik,
- Fig. 3:: Ein Detail eines Übergabebereichs von der Drescheinrichtung zu der Trenneinrichtung eines erfindungsgemäßen Mähdreschers,
- Fig. 4:: Ein Querschnitt durch einen Einlaufbereich eines Einlaufkopfs,
- Fig. 5:: Eine perspektivische Ansicht eines Einlaufkopfs mit 2 Einlaufbereichen,
- Fig. 6:: Ein Detail eines Zuführabschnitts des Einlaufbereichs gemäß Figur 4,
- Fig. 7:: Eine Vorderansicht des Einlaufkopfs gemäß Figur 5,
- Fig. 8:: Eine Vorderansicht der Einlaufbereiche gemäß Figur 5.

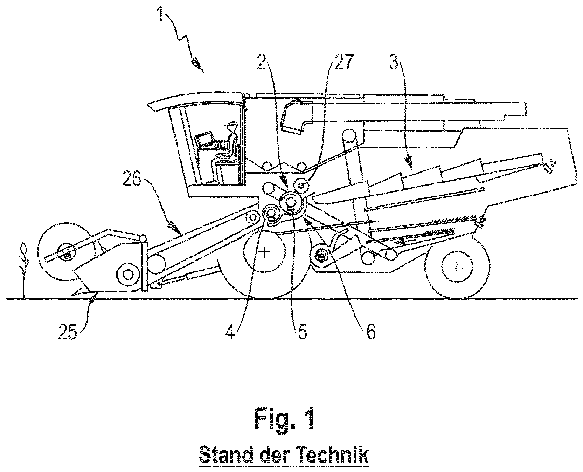

Ein nach dem Stand der Technik bekannter Mähdrescher **1** ist beispielhaft anhand von **Figur 1** veranschaulicht. Dieser umfasst ein Schneidwerk **25**, mittels dessen Pflanzen abschneidbar sind, die sodann mittels eines Schrägförderers **26** einer tangentiale Drescheinrichtung **2** zuführbar sind. Die Drescheinrichtung **2** umfasst eine Vortrommel **4**, eine Dreschtrommel **5** sowie eine Wendetrommel **27**, wobei Mittelachsen der Trommeln quer zu einer Längsrichtung des Mähdreschers **1** ausgerichtet sind. Ferner umfasst die Drescheinrichtung **2** einen Dreschkorb **6**, der zumindest die Vortrommel **4** und die Dreschtrommel **5** bereichsweise einfasst. Die Verarbeitung des Ernteguts mittels der Drescheinrichtung **2** führt dazu, dass Früchte von den Pflanzen abgelöst und die Pflanzen auf diese Weise in die Früchte und verbleibende Pflanzenreste getrennt werden. Ein Großteil der Früchte kann unmittelbar im Bereich der Drescheinrichtung **2** mittels des Dreschkorbs **6** nach unten auf einen Vorlaufboden abgeführt werden. Im Übrigen wird ein Gemisch aus Pflanzenresten und abgelösten Früchten mittels der Wendetrommel **27** an eine nachgeschaltete Trenneinrichtung **3** übergeben. Diese ist in dem in **Figur 1** gezeigten Beispiel von einem Hordenschüttler gebildet. Die Trenneinrichtung **3** hat die Aufgabe, die verbliebenen Früchte von den Pflanzenresten zu trennen, sodass diese separiert gewonnen werden können. Die Pflanzenreste werden schließlich an einem hinteren Ende des Mähdreschers **1** aus selbigem ausgeworfen. Die Früchte werden hingegen in einem Korntank gesammelt und bis zur weiteren Abfuhr gelagert.

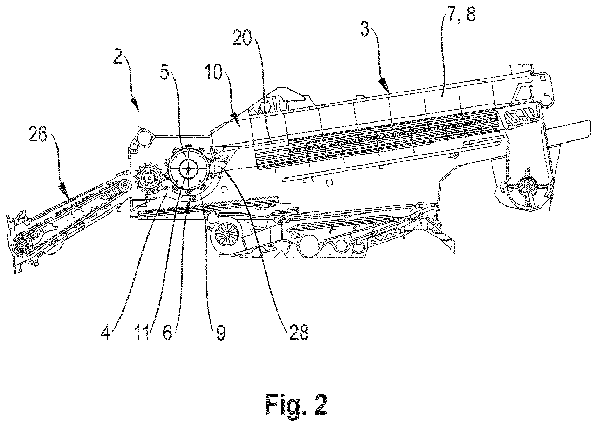

Alternativ zu einer als Hordenschüttler ausgebildeten Trenneinrichtung **3** ist ebenfalls eine axiale Trenneinrichtung **3** bekannt, die über mindestens einen Trennrotor **7**, **8** verfügt. Anhand des in **Figur 2** gezeigten Beispiels aus dem Stand der Technik ergibt sich eine axiale Trenneinrichtung **3**, die über zwei Trennrotoren **7**, **8** verfügt, die parallel zueinander sowie in Längsrichtung des Mähdreschers **1** betrachtet nebeneinander angeordnet sind. Die Trennrotoren **7**, **8** sind jeweils um eine Drehachse **20** drehantreibbar gelagert. Die Trenneinrichtung **3** umfasst in diesem Beispiel einen der Drescheinrichtung **2** zugewandten Einlaufkopf **10**, in den das Erntegut ausgehende von der Drescheinrichtung **2** übergeben wird. Hierzu umfasst der Einlaufkopf **10** zwei Einlaufbereiche **29**, von denen jeweils einer einem der Trennrotoren **7**, **8** zugeordnet ist. Die Einlaufbereiche **29** sind mittels eines Gutstromteilers **28** baulich voneinander getrennt, sodass Erntegut, das von der Drescheinrichtung **2** an die Trenneinrichtung **3** übergeben wird, mittels des Gutstromteilers **28** auf die beiden Einlaufbereiche **29** aufgeteilt wird. Der Gutstromteiler **28** ist hier von einer vertikalen Trennwand gebildet, die die beiden Einlaufbereiche **29** voneinander trennt. Eine Besonderheit der in **Figur 2** dargestellten Ausführungsform besteht darin, dass die Drescheinrichtung **2** ohne eine in **Figur 1** dargestellt Wendetrommel **27** oder eine sonstige Zuführtrommel ausgebildet ist, sodass das Erntegut unmittelbar von der Dreschtrommel **5** an die Trenneinrichtung **3** übergeben wird.

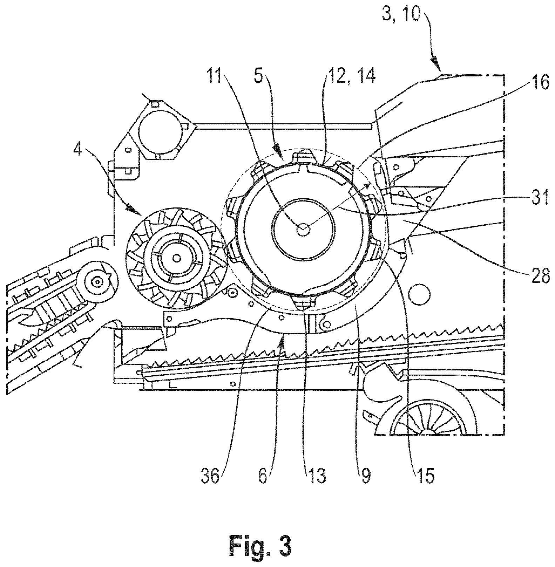

Die Dreschtrommel **5** erstreckt sich längs entlang einer Mittelachse **11** eines Trommelkörpers **12** und umfasst eine Mehrzahl von Schlagleisten **13.** Dies ergibt sich besonders gut anhand von **Figur 3**. Die Schlagleisten **13** sind an einer äußeren Mantelfläche **14** des Trommelkörpers **12** der Dreschtrommel **5** angeordnet, wobei die Schlagleisten **13** bezogen auf die Mittelachse **11** des Trommelkörpers **12** radial über die Mantelfläche **14** hinaus vorstehen. Die Schlagleisten **13** umfassen jeweils eine Schlagkante **15**, die einen radial äußeren Abschluss einer jeweiligen Schlagleiste **13** bildet. Infolge eines Drehantriebs der Dreschtrommel **5** um die Mittelachse **11** im Zuge eines Betriebs des jeweiligen Mähdreschers **1** kommen die Schlagleisten **13** mit ihren Schlagkanten **15** in schlagenden Kontakt mit dem Erntegut, wodurch die Ablösung der Früchte von den Pflanzenresten bewirkt wird. Die Schlagkanten 15, die sich parallel zu der Mittelachse 11 erstrecken, bewegen sich im Zuge eines Drehantriebs des Trommelkörpers 12 auf einem Umfangskreis 16, der in **Figur 3** anhand einer gestrichelten Linie veranschaulicht ist. Der Umfangskreis 16 erstreckt sich bezogen auf die Mittelachse 11 in einem Schlagradius 31 um die Mittelachse 11. Um einen Fluss des Ernteguts von der Drescheinrichtung 2 zu der Trenneinrichtung 3 zu begünstigen, ist der Dreschkorb 6 bündig einem der Drescheinrichtung 2 zugewandten Ende des Einlaufkopfs **10** vorgeordnet. In dem gezeigten Beispiel umfasst der Dreschkorb **6** ein hinteres Korbsegment **9**, das unmittelbar sowie bündig dem Einlaufkopf **10** vorgeordnet ist.

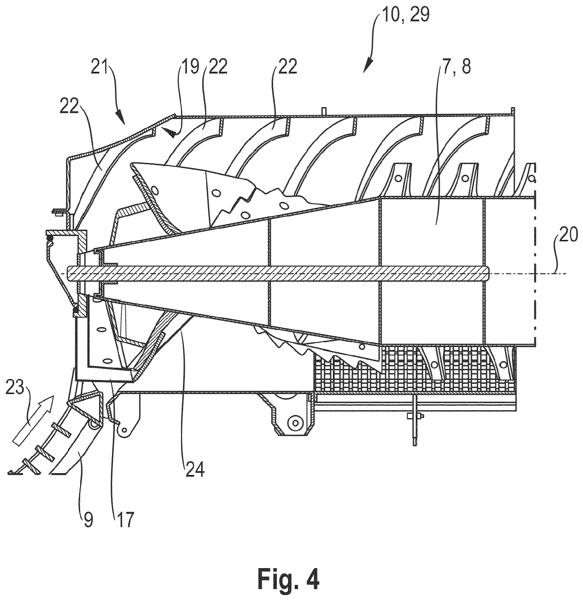

Das Erntegut wird ausgehend von der Drescheinrichtung **2** an die Trenneinrichtung **3** übergeben. Hierbei findet eine unmittelbare Übergabe des Ernteguts von der Dreschtrommel **5** an den Einlaufkopf **10** der Trenneinrichtung **3** statt. Dies ergibt sich besonders gut anhand der **Figuren 3** **und** **4**. Das Erntegut wird im Bereich der Dreschtrommel **5** in einem Dreschspalt 36 geführt, der sich zwischen der äußeren Mantelfläche **14** des Trommelkörpers **12** der Dreschtrommel **5** und dem Dreschkorb **6** erstreckt. Der Dreschkorb **6** kann derart verstellbar sein, dass eine Mächtigkeit des Dreschspalts **36** veränderbar ist. Ausgehend von dem Dreschspalt **36** strömt das Erntegut an einer Übergabestelle in den Einlaufkopf **10** ein. Dies ergibt sich besonders gut anhand des Querschnitts gemäß **Figur 4**, wobei eine Übergaberichtung **23**, in die das Erntegut im Zuge der Übergabe an der Übergabestelle strömt, mittels eines Pfeils veranschaulicht ist. In dem gezeigten Beispiel strömt das Erntegut ca. in einem Winkel von 50° von schräg unten aus dem Dreschspalt **36** in den Einlaufkopf **10** nach schräg oben ein. Wie vorstehend dargelegt, ist der Einlaufkopf **10** mittels des Gutstromteilers **28** in zwei Einlaufbereiche **29** unterteilt, wobei jedem der Einlaufbereiche **29** einer der Trennrotoren **7**, **8** zugeordnet ist. Die Einlaufbereiche **29** umfassen jeweils einen Zuführabschnitt **21**, der ein der Dreschtrommel **5** zugewandtes Ende des jeweiligen Einlaufbereichs **29** bildet. Seitlich außen sind die Zuführabschnitte **21** mittels Seitenblechen **18** baulich abgeschlossen.

In den Zuführabschnitten **21** umfassen die Einlaufbereiche **29** jeweils eine Einlaufschräge **24**, die in dem gezeigten Beispiel jeweils von einem schräg orientierten Blech gebildet ist. Dies ergibt sich besonders gut anhand der **Figuren 4 bis 8**. Die Einlaufschrägen **24** sind an die Übergaberichtung **23** angepasst geneigt ausgeführt, sodass der Erntegutstrom im Zuge seines Übergangs von der Drescheinrichtung **2** an die Trenneinrichtung **3** so wenig wie möglich umgelenkt werden muss. Eine Umlenkung erfolgt hauptsächlich im Bereich des Gutsromteilers **28**, an dem die Zuteilung einzelner Bestandteile des Ernteguts zu dem einen oder dem anderen Einlaufbereich **29** erfolgt. Mithin sind in dem gezeigten Beispiel die Einlaufschrägen **24** zumindest in ihren in sich ebenen Bereichen zumindest im Wesentlichen ebenfalls um ca. 50° gegenüber der Horizontalen geneigt ausgebildet, wobei sich diese Angabe bezogen auf einen senkrecht zu der Mittelachse **11** des Trommelkörpers **12** geführten Schnitt bezieht, wie er beispielsweise in **Figur 4** dargestellt ist.

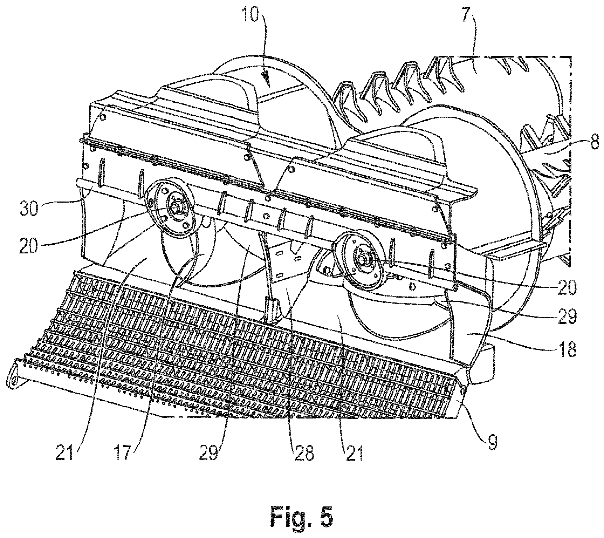

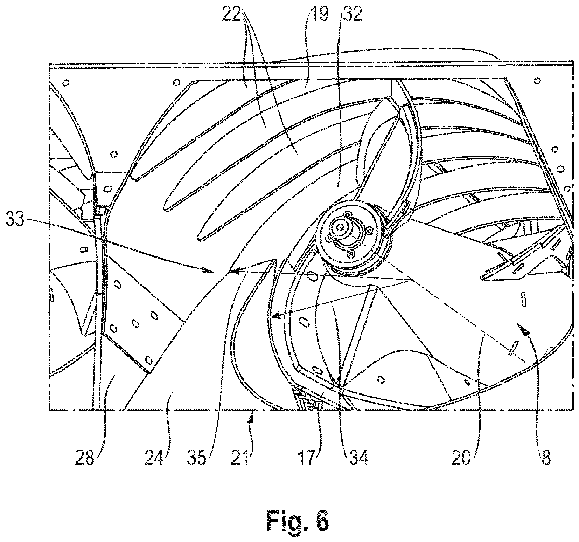

Um das Einströmen des Ernteguts in die Einlaufbereiche **29** weiter zu begünstigen, weiteten sich die Einlaufbereiche **29** in Richtung auf die Dreschtrommel zu hin auf, sodass senkrecht zu den Drehachsen **20** der Trennrotoren **7**, **8** geführte Querschnitte der Einlaufbereiche sich in Richtung auf die Dreschtrommel **5** zu aufweiten. In dem gezeigten Beispiel erfolgt die Aufweitung insbesondere sprunghaft, wie sich besonders gut anhand von **Figur 6** ergibt. Dort ist eine Aufweitung **33** veranschaulicht, die an einem in Strömungsrichtung des Erntegutstroms betrachteten Ende der Einlaufschräge **24** ausgebildet ist. An der Aufweitung **33** erfolgt in Strömungsrichtung des Erntegutstroms betrachtet ein sprunghafter Rücksprung, sodass ein Radius **35** des Einlaufbereichs **29** im Bereich diesseits der Aufweitung **33** größer ist als ein Radius **34** des Einlaufbereichs **29** jenseits der Aufweitung **33**. In Richtung auf ein der Dreschtrommel **5** zugewandtes Ende des Einlaufkopfs **10** zu erweitern sich die Einlaufbereiche **29** infolge der schrägen Ausbildung der jeweiligen Einlaufschräge **24** weiter, wie sich besonders gut anhand von **Figur 5** ergibt. Im Ergebnis ist eine Freifläche eines jeweiligen Einlaufbereichs **29** an der Übergabestelle, an der das Erntegut ausgehend von dem Dreschspalt **36** in den Einlaufkopf **10** einströmt, möglichst groß, sodass das Erntegut ungehindert in den Einlaufkopf **10** einströmen kann. Auf diese Weise sind Strömungswiderstände, die sich dem Erntegutstrom entgegenstellen, minimiert.

In besonders bevorzugter Weise verfügt der Einlaufkopf **10** in dem gezeigten Beispiel in den Einlaufbereichen **29** jeweils über eine Mehrzahl von Führungselementen **22**, die in einer oberen Hälfte des Einlaufkopfs **10** an einer inneren Mantelfläche **19** eines jeweiligen Einlaufbereichs **29** angeordnet sind. Die Führungselemente **22** dienen dazu, das in den jeweiligen Einlaufbereich **29** eingetretene Erntegut in die gewünschte spiralförmige Strömung um die Drehachse **20** des jeweiligen Trennrotors **7**, **8** zu versetzen und auf diese Weise den Erntegutstrom geordnet dem jeweiligen Trennrotor **7**, **8** zuzuführen. In bevorzugter Weise sind in dem gezeigten Beispiel Steigungen der Führungselemente **22** derart an die Übergaberichtung **23** angepasst, dass das Erntegut möglichst "sanft" von den Führungselementen **22** übernommen werden kann. Insbesondere ist vermieden, dass das Erntegut infolge des Kontakts mit den Führungselementen **22** mehrfach umgelenkt wird, wodurch zusätzliche Strömungswiderstände entstehen würden.

Weiterhin verfügen die Einlaufbereiche **29** an einem der Dreschtrommel **5** abgewandten Ende der Einlaufschräge **24**, d.h. an einen der Dreschtrommel **5** abgewandten Ende des jeweiligen Zuführabschnitts **21**, jeweils über ein Übergangselement **32**, das die Steigung der Einlaufschräge **24** aufweist, sodass ein Teil des Erntegutstroms, der an der inneren Mantelfläche **19** des jeweiligen Einlaufbereichs **29** entlang über die Einlaufschräge **24** bis zu der Aufweitung **33** geführt wird, unmittelbar von dem Übergangselement **32** übernehmbar und in die spiralförmige Bewegung versetzbar ist. Hierbei ist das Übergangselement **32** analog zu den Führungselementen **22** spiralförmig um die Drehachse **20** des jeweiligen Trennrotors **7**, **8** geformt ausgeführt, sodass das Erntegut unter einer möglichst geringen Einwirkung auf dessen Strömungsrichtung dem jeweiligen Trennrotor **7**, **8** zugeführt werden kann.

Unterstützend für die Übernahme des Ernteguts von der Drescheinrichtung **2** sind die Trennrotoren **7**, **8** in dem gezeigten Beispiel jeweils mit zwei Einlaufflügeln **17** ausgestattet. Die Einlaufflügel **17** wirken jeweils in dem jeweiligen Zuführabschnitt **21** des jeweiligen Einlaufbereichs **29** und dienen dazu, das Erntegut ausgehend von einer zumindest im Wesentlichen linearen Strömung, die das Erntegut bei seinem Übergang von dem Dreschspalt **36** in den Einlaufkopf **10** aufweist, in die gewünschte spiralförmig drehende Bewegung um die Drehachse **20** zu versetzen. Das Erntegut wird mithin bei seinem Eintritt in den Einlaufkopf **10** besonders frühzeitig von den Trennrotoren **7**, **8** erfasst, sodass der Abtransport von Erntegut aus den Zuführabschnitten **21** zügig vonstatten geht. Hierdurch ist das Risiko von Verstopfungen oder sonstigen Verzögerungen weiter reduziert.

Die besonders schmale Ausgestaltung des Gutstromteilers **28**, der hier in der beschriebenen Weise von einer vertikalen Trennwand gebildet ist, ist ebenfalls vorteilhaft, da der Gutstromteiler **28** auf diese Weise die Freiflächen der Einlaufbereiche **29**, die dem Erntegut bei seinem Eintritt in den Einlaufkopf **10** zur freien Strömung zur Verfügung stehen, kaum beschneidet. Dem Erntegut steht mithin viel Raum zur Verfügung, um von der Trenneinrichtung **3** übernommen zu werden.

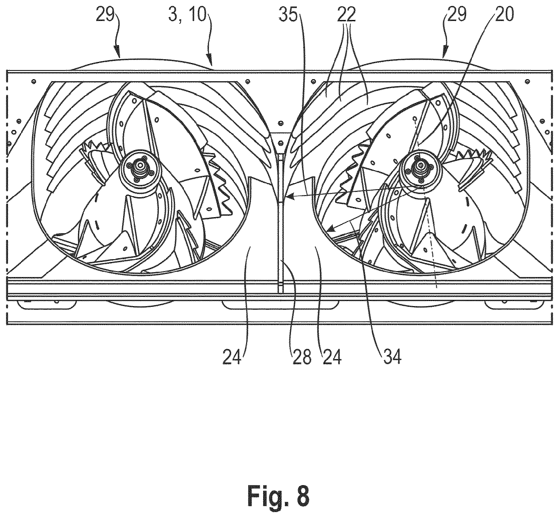

Für eine vorteilhafte Übernahme des Erntegutstroms im Bereich des Einlaufkopfs **10** der Trenneinrichtung **3** ist es bei dem gezeigten Beispiel weiterhin vorteilhaft, wenn die Trennrotoren **7**, **8** gegenläufig um ihre Drehachsen **20** angetrieben werden, wobei die Drehrichtungen vorteilhafterweise derart eingestellt sind, dass die Trennrotoren **7**, **8** mit ihren Einlaufflügeln **17** jeweils von schräg unten zur Mitte auf den Gutstromteiler **28** zu drehen. Mit anderen Worten drehen bevorzugt der in Strömungsrichtung des Ernteguts betrachtet linke Trennrotor **7** entgegen dem Uhrzeigersinn und der rechte Trennrotor **8** mit dem Uhrzeigersinn. Die Steigungen der Führungselemente **22** sowie die Ausgestaltung der Einlaufflügel **17** sind in dem gezeigten Beispiel entsprechend vorgenommen. Dies ist besonders gut anhand von **Figur 8** erkennbar.

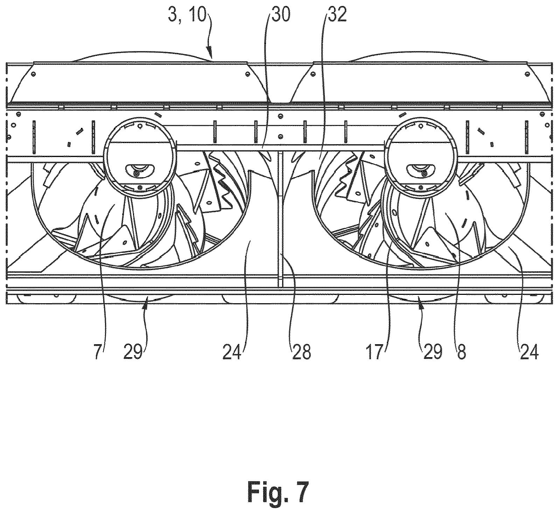

Im Übrigen ist zwecks Verbesserung der Eintragung des Ernteguts in den Einlaufkopf **10** letzterer in dem gezeigten Beispiel mit einer Abstreifkante **30** ausgestattet, die sich besonders gut anhand der **Figuren 5** **und** **7** ergibt. Die Abstreifkante **30** ist in seitlichen Außenbereichen des Einlaufkopfs **10** auf einem niedrigeren Höhenniveau angeordnet als in einem Zwischenbereich zwischen den Trennrotoren **7**, **8**. Sie dient dazu, Erntegut, das in Umfangsrichtung der Dreschtrommel **5** geführt wird, von der Dreschtrommel **5** "abzustreifen" und auf diese Weise in den Einlaufkopf **10** abzuleiten. Hierdurch wird ein Überwerfen des Ernteguts über die Dreschtrommel **5** weitestgehend vermieden, und zwar auch dann, wenn der Erntegutstrom betragsmäßig besonders groß ausfällt. Auf diese Weise ist das Risiko von Blockaden oder dergleichen im Zuge der Übergabe des Ernteguts von der Drescheinrichtung **2** an die Trenneinrichtung **3** weiter reduziert.

### Bezugszeichenliste

- 1: Mähdrescher
- 2: Drescheinrichtung
- 3: Trenneinrichtung
- 4: Vortrommel
- 5: Dreschtrommel
- 6: Dreschkorb
- 7: Trennrotor
- 8: Trennrotor
- 9: Korbsegment
- 10: Einlaufkopf
- 11: Mittelachse
- 12: Trommelkörper
- 13: Schlagleiste
- 14: Mantelfläche
- 15: Schlagkante
- 16: Umfangskreis
- 17: Einlaufflügel
- 18: Seitenblech
- 19: Mantelfläche
- 20: Drehachse
- 21: Zuführabschnitt
- 22: Führungselement
- 23: Übergaberichtung
- 24: Einlaufschräge
- 25: Schneidwerk
- 26: Schrägförderer
- 27: Wendetrommel
- 28: Gutstromteiler
- 29: Einlaufbereich
- 30: Abstreifkante
- 31: Schlagradius
- 32: Übergangselement
- 33: Aufweitung
- 34: Radius
- 35: Radius
- 36: Dreschspalt

## Patentansprüche

1. Selbstfahrender Mähdrescher (1), umfassend
- eine tangentiale Drescheinrichtung (2) sowie
- eine axiale Trenneinrichtung (3),
wobei die Drescheinrichtung (2) eine tangentiale Vortrommel (4), eine in Strömungsrichtung eines Erntegutstroms der Vortrommel (4) nachgeschaltete, um eine Mittelachse (11) drehantreibbare, tangentiale Dreschtrommel (5) sowie einen sowohl die Vortrommel (4) als auch die Dreschtrommel (5) zumindest bereichsweise ummantelnden Dreschkorb (6) aufweist,
wobei die Trenneinrichtung (3) in Strömungsrichtung des Erntegutstroms betrachtet unmittelbar der Dreschtrommel (5) nachgeschaltet ist und zwei axiale Trennrotoren (7, 8) umfasst, die um eine Drehachse (20) drehantreibbar gelagert sind,
wobei die Trenneinrichtung (3) an einem der Dreschtrommel (5) zugewandten Ende einen Einlaufkopf (10) aufweist, in den Erntegut ausgehend von der Dreschtrommel (5) unmittelbar übergebbar und geordnet den Trennrotoren (7, 8) zuleitbar ist,
wobei den Trennrotoren (7, 8) jeweils ein Einlaufbereich (29) des Einlaufkopfs (10) zugeordnet ist, in denen der Einlaufkopf (10) eine zumindest im Wesentlichen zylindrische Form aufweist, die an einen Umfangskreis eines Einlaufflügels (17) eines jeweiligen Trennrotors (7, 8) angepasst ist, sodass der Einlaufflügel (17) Erntegut, das an einer inneren Mantelfläche (19) des jeweiligen Einlaufbereichs (29) geführt ist, im Zuge eines bestimmungsgemäßen Betriebs des Trennrotors (7, 8) erfassen und auf diese Weise in axiale Richtung des Trennrotors (7, 8) transportieren kann,
**dadurch gekennzeichnet, dass**
der Einlaufkopf (10) an einem der Dreschtrommel (5) zugewandten Ende einen mittigen, die beiden Einlaufbereiche (29) voneinander trennenden Gutstromteiler (28) aufweist, der in Form einer vertikal orientierten Trennwand zwischen den Einlaufbereichen (29) ausgebildet ist,
wobei die Einlaufbereiche (29) in ihren jeweiligen Zuführabschnitten (21), die sich ausgehend von einem der Dreschtrommel (5) zugewandten Ende des Einlaufkopfs (10) aus in axiale Richtung der Trennrotoren (7, 8) erstrecken, jeweils eine Einlaufschräge (24) aufweisen, deren Steigung - in einem senkrecht zu der Mittelachse (11) geführten Querschnitt betrachtet - an eine Übergaberichtung (23) angeglichen ist, in die das Erntegut im Moment seiner Übergabe von der Dreschtrommel (5) an den Einlaufkopf (10) tangential bezogen auf die Mittelachse (11) strömt.

2. Mähdrescher (1) nach Anspruch 1, **dadurch gekennzeichnet, dass** senkrecht zu den Drehachsen (20) der Trennrotoren (7, 8) geführter Querschnitte der Einlaufbereiche (29) des Einlaufkopfs (10) sich in Richtung auf die Dreschtrommel (5) zu aufweiten, wobei vorzugsweise die Aufweitung (33) sprunghaft erfolgt.

3. Mähdrescher (1) nach Anspruch 2, **dadurch gekennzeichnet, dass** die Einlaufschräge (24) sich von einem der Dreschtrommel (5) zugewandten Ende des Einlaufkopfs (10) bis zu einem Ende der Aufweitung (33) erstreckt.

4. Mähdrescher (1) nach einem der vorhergehenden Ansprüche, **dadurch gekennzeichnet, dass** der Einlaufkopf (10) mindestens ein Führungselement (22) aufweist, das sich nach Art eines Spiralabschnitts sowohl tangential als auch mit einer Steigung bezogen auf die Drehachse (20) des jeweils zugehörigen Trennrotors (7, 8) an einer inneren Mantelfläche (19) des jeweiligen Einlaufbereichs (29) erstreckt.

5. Mähdrescher (1) nach Anspruch 4, **dadurch gekennzeichnet, dass** der Einlaufkopf (10) in den Einlaufbereichen (29) eine Mehrzahl von Führungselementen (22) aufweist, wobei vorzugsweise die Führungselemente (22) eines jeweiligen Einlaufbereichs (29) parallel zueinander, weiter vorzugsweise äquidistant zueinander, angeordnet sind.

6. Mähdrescher (1) nach einem der vorhergehenden Ansprüche, **dadurch gekennzeichnet, dass** sich das mindestens eine Führungselement (22) - im Querschnitt des jeweiligen Einlaufbereichs (29) betrachtet - in einer oberen Hälfte des Einlaufkopfs (10) an der inneren Mantelfläche (19) des Einlaufbereichs (29) erstreckt.

7. Mähdrescher (1) nach einem der vorhergehenden Ansprüche, **dadurch gekennzeichnet, dass** die auf die Drehachse (20) des jeweilig zugehörigen Trennrotors (7, 8) bezogene Steigung des mindestens einen Führungselements (22) derart an die Übergaberichtung (23), in der das Erntegut ausgehend von der Dreschtrommel (5) an den Einlaufkopf (10) übergeben wird, angepasst ist, dass der Erntegutstrom beim Übergang von dem Dreschkorb (6) an den Einlaufkopf (10) zumindest im Wesentlichen umlenkungsfrei übernommen wird.

8. Mähdrescher (1) nach einem der vorhergehenden Ansprüche, **dadurch gekennzeichnet, dass** die Trennrotoren (7, 8) jeweils mindestens einen Einlaufflügel (17) umfassen, wobei sich ein jeweiliger Einlaufflügel (17) so weit in Richtung auf die Dreschtrommel (5) zu erstreckt, dass der Einlaufflügel (17) bis an einen Umfangskreis (16) von Schlagkanten (15) der Dreschtrommel (5) heranreicht.

9. Mähdrescher (1) nach einem der vorhergehenden Ansprüche, **gekennzeichnet durch** eine parallel zu der Mittelachse (11) des Trommelkörpers (12) der Dreschtrommel (5) orientierte Abstreifkante (30), die an einem der Dreschtrommel (5) zugewandten Ende des Einlaufkopfs (10) angeordnet und dazu eingerichtet ist, im Zuge eines Drehantriebs der Dreschtrommel (5) um die Mittelachse (11) mittels der Dreschtrommel (5) geführtes Erntegut in den Einlaufkopf (10) abzustreifen.
